# EUROPÄISCHE PATENTSCHRIFT

(11) **EP 1 288 424 B1**
(45) Veröffentlichungstag und Bekanntmachung des Hinweises auf die Patenterteilung: **03.02.2010**
(21) Anmeldenummer: 02018307.5
(22) Anmeldetag: 14.08.2002
(51) Int. Cl.: E06B 3/30, B29C 63/02

(54) **Verfahren und Vorrichtung zum Foliieren von Profilen**
Method and device for coating profiles with a foil
Procédé et dispositif pour couvrir des profilés avec une feuille

(30) Priorität: 24.08.2001 DE 10140673
(43) Veröffentlichungstag der Anmeldung: 05.03.2003
(73) Patentinhaber: SCHÜCO International KG, 33609 Bielefeld (DE)
(72) Erfinder: Atzler, Norbert, 42781 Haan (DE); Gasnik, Wolfgang, 40472 Düsseldorf (DE)
(74) Vertreter: Specht, Peter

(56) Entgegenhaltungen:
- EP-A- 0 137 860
- DE-A- 3 439 474
- DE-A- 19 924 139

## Beschreibung

Die vorliegende Erfindung betrifft ein Verfahren und eine Vorrichtung zum Foliieren von Profilen, insbesondere für Fenster, Türen und Fassaden.

Es ist bekannt, Profile aus Kunststoff, Metall, insbesondere Aluminium, und Holz mit Folien zu beschichten, also zu foliieren, um .sie farblich zu gestalten oder gegen Außenbewitterung widerstandsfähiger zu machen. Für das Foliieren wird zunächst ein Haftuntergrund für die zukünftige Verklebung aufgetragen, das sogenannte Primern, anschließend wird der Haftuntergrund belüftet und getrocknet, so dass das Lösungsmittel des Haftuntergrundes sich verflüchtigt. In einem dritten Schritt wird eine Folie mit einem Kleber benetzt, und auf das Profil aufgetragen, wobei mehrere Rollen und Walzen dafür sorgen, dass die Folie auch an Radien oder Kanten formschlüssig an dem Profil anliegt.

Bei bekannten Foliieranlagen wird das Profil zwischen Führungsrollen zu den einzelnen Arbeitsstationen bewegt, weshalb bei der üblichen Profillänge von 6 m und der Vorsehung einer Belade- und einer Entladestation die fünf Stationen in Längsrichtung einen Platzbedarf von etwa 30 m besitzen. Die Führung der Profile an den Rollen muss dabei für jedes Profil individuell eingestellt werden, da eine genaue Führung wichtig für die Qualität der Beschichtung ist. Bei einem Wechsel des Profils besteht somit ein erheblicher Aufwand zum Umrüsten, so dass kleinere Mengen von Profilen nicht effektiv zu beschichten sind. Die relativ großen Anlagen sind ferner nur von mehreren Personen zu bedienen, so dass diese Anlagen auch im Unterhalt teuer sind.

Die DE 199 24 139 eine Primerzusammensetzung und deren Verwendung beim Beschichten von Kunststoffsubatraten, beispielsweise bei Kunststoff-Fensterprofilen. Die Primerzusammensetzung wird auf das Kunststoffsubstrat aufgetragen und das darin enthaltene Lösungsmittel verdampft. Dann wird ein Polyurethanklebstoff aufgebracht und ein Teil daran verklebt.

Es ist daher Aufgabe der vorliegenden Erfindung, ein Verfahren und eine Vorrichtung zum Foliieren von Profilen für Fenster, Türen und Fassaden zu schaffen, das auch für kleine Mengen von Profilen wirtschaftlich einsetzbar ist und ein schnelles Umrüsten auf unterschiedliche Profile möglich ist. Ferner soll die Vorrichtung bei einfachem Aufbau nur einen geringen Raum- und Personalbedarf besitzen.

Diese Aufgabe wird mit einem Verfahren mit den Merkmalen des Anspruches 1 und einer Vorrichtung mit den Merkmalen des Anspruches 2 gelöst.

Wenn gemäß dem erfindungsgemäßen Verfahren das Profil an einem Auslagetisch eingespannt wird und anschließen über die Arbeitsstationen ein Haftgrund auf das Profil aufgebracht wird, dieser Haftgrund belüftet und getrocknet wird und anschließend die Folie aufgeklebt wird, können in kurzer Zeit nacheinander unterschiedliche Profile beschichtet werden. Hierfür muss lediglich eine Umrüstung an dem Auflagetisch erfolgen, d. h. die Spanneinrichtungen müssen auf das neu zu beschichtende Profil angepasst werden und gegebenenfalls muss eine andere Folge in die Arbeitsstation eingeführt werden. Diese Arbeitsschritte sind jedoch verglichen mit dem Umrüsten sämtlicher Führungsrollen einer Foliierungsanlage mit beweglichen Profilen erheblich geringer. Ferner sinkt der Raumbedarf, da die einzelnen Arbeitsstationen nicht mehr hintereinander angeordnet werden müssen.

Für ein besonders effektives Beschichten der Profile wird das Profil auf einen Schlitten eingespannt, der quer zur Längsrichtung zu den einzelnen Arbeitsstationen verfahren wird, wobei die Arbeitsstationen dann jeweils in Längsrichtung des Profils bewegt werden. Dies ermöglicht eine effektive Beschichtung mit nur kurzen Verfahrwegen, wobei es auch möglich list mehrere Profile zusammen an einem oder mehreren Schlitten festzulegen, damit mehrere Arbeitsstationen gleichzeitig im Einsatz sind.

Die erfindungsgemäße Vorrichtung zeichnet sich durch eine kompakte Bauweise: aus, da die Arbeitsstationen an einem gemeinsamen Rahmengestell mit vergleichsweise geringer Längsausdehnung festgelegt werden können. Durch die schnelle Umrüstbarkeit auf verschiedene Profiltypen eignet sich die Vorrichtung auch besonders gurt als Ergänzung zu bestehenden Foliierungsanlagen, um auf der Vorrichtung nur die Aufträge mit geringer Stückzahl abzuarbeiten.

Gemäß einer bevorzugten Ausführungsform der Erfindung sind die drei Arbeitsstationen oberhalb des Auflagetisches jeweils an Führungen angebracht. Dadurch sind die einzelnen Arbeitsstationen gut zugänglich, und es können auf einfache Weise die Arbeitsstationen mit einem Haftmittel, einem Klebemittel oder einer Folie bestückt werden. Für eine besonders kompakte Bauweise ist es auch möglich, die Aubeitsstationen im Bereich des Profils über eine gemeinsame Führung laufen zu lassen und die Arbeitsstationen außerhalb des Bereichs des Profils über eine Weichemstellung in eine Parkposition zu bringen.

Vorzugsweise sind die Arbeitsstationen einzeln oder zusammen in Längsrichtung des Profils verfahrbar, so dass je nach Bedarf eine Arbeitsstation zugeschaltet werden kann. Dabei können die Arbeitsstationen über eine gemeinsam Antriebseinheit bewegbar sein, und jeweils über eine Kupplung an die Antriebseinheit gekoppelt werden. Dies ermöglicht einen besonderen flexiblen Einsatz der Arbeitsstationen.

Gemäß der Erfindung ist das Profil am Auflagetisch an einem Schlitten festlegbar und der Schlitten in einer Richtung quer zur Längsrichtung des Profils verfahrbar. Dies ermöglicht eine besonders effektiv Beschichtung der Profile, indem die Fahrwege kurz gehalten werden und bei Vorsehung mehrerer Schlitten auch mehrere Arbeitsstationen gleichzeitig eingesetzt werden können.

Vorzugsweise ist der Auflagetisch mittig innerhalb der Vorrichtung angeordnet, und die Arbeitsstationen können beidseitig des Profils außerhalb des Bereichs des Profils verfahren werden und dort in eine Parkposition abgestellt werden. Dies vermeidet unnötige Rückführgänge einzelner Arbeitsstationen.

Um ein schnelles Umrüsten bei Beschichtung eines neuen Profils zu ermöglichen, sind vorzugsweise an dem Schlitten vorbereitete auf das jeweilige Profil angepasste Spannsätze montierbar. Diese vorbereiteten Spannsätze weisen Klemmelemente auf, die an den gewünschten Positionen des Profils festlegbar sind.

Die Erfindung wird nachfolgend anhand eines Ausführungsbeispieles mit Bezug auf die beigefügten Zeichnungen näher erläutert. Es zeigen:

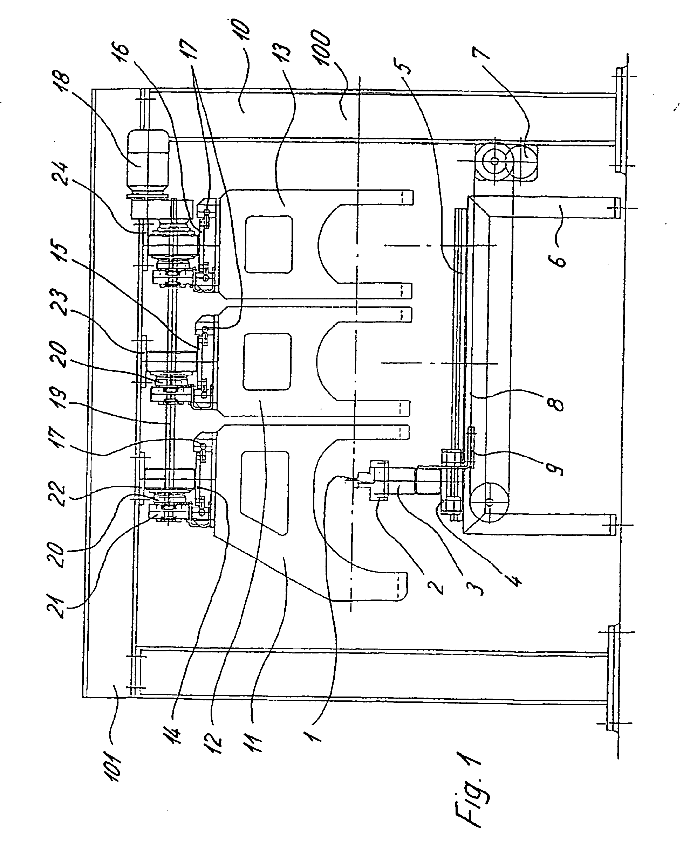

- Fig. 1: eine Vorderansicht eines Ausführungsbeispiels einer erfindungsgemäßen Vorrichtung zum Foliieren von Profilen;
- Fig. 2: eine verkleinerte Vorderansicht der Vorrichtung der Figur 1;
- Fig. 3: eine Seitenansicht auf die Vorrichtung der Figur 1 mit verkürztem Mittelteil;
- Fig. 4: eine Draufsicht auf die Vorrichtung der Figur 1 mit verkürztem Mittelteil;
- Fig. 5: eine Seitenansicht auf die Vorrichtung der Figur 1;
- Fig. 6: eine Draufsicht auf die Vorrichtung der Figur 1;
- Fig. 7: eine Seitenansicht auf die Arbeitsstation zum Belüften und Trocknen des Profils, und
- Fig. 8: eine Seitenansicht auf die Arbeitsstation zum Aufbringen der Folie.

Die dargestellte Foliierungsanlage dient zur Beschichtung eines Profils 1 aus Kunststoff, Metall oder Holz, das mittels einer Spannvorrichtung 2 mit einzelnen Spannbacken an einem Halter 3 festgelegt ist. Der Halter 3 umfasst dabei eine Vielzahl von Spannbacken und kann komplett an einem Schlitten 4 befestigt werden. Ferner können die einzelnen Spannbacken der Spannvorrichtung 2 an einer Referenzvorrichtung ausgerichtet werden, um auf das jeweilige Profil 1 angepasst zu werden.

Der Schlitten 4 ist an einer Führungsbahn 5 quer zur Längsrichtung des Profils 1 bewegbar, wobei ein Antrieb 7 ein Band 8 antreibt, an dem der Schlitten 4 über einen Mitnehmer 9 festgelegt ist. Die Führungsbahn 5 ist an einem stationären Auflagetisch 6 montiert. Der Antrieb des Schlittens 4 kann dabei statt über einen Bandoder Kettenantrieb auch mittels Spindel-, Zahnrad-, Zahnstangen-Antrieb sowie hydraulisch oder pneumatisch erfolgen.

Der Auflagetisch 6 befindet sich innerhalb eines Rahmengestells 10, das aus mehreren miteinander verbundenen Pfosten 100 und Querträgern 101 gebildet ist.

An den oberen Querträgern 101 sind Längsprofile 22, 23 und 24 vorgesehen, an denen Führungen 14, 15 und 16 gehalten sind. An den Führungen 14, 15 und 16 sind jeweils bewegbare Führungseinrichtungen 17 von Arbeitsstationen 11, 12 und 13 vorgesehen. Die Arbeitsstationen 11, 12 und 13 können über die Führungseinrichtung 17 längs der Führungen 22, 23 und 24 verfahren werden. Hierfür weist jede Arbeitsstation 11, 12 und 13 eine Kupplung 20, vorzugsweise eine Elektromagnetkupplung auf, die mit einem Kettentrieb 21 koppelbar ist. Der Kettentrieb 21 ist über einen Antrieb 18 angetrieben, wobei durch die Betätigung der Kupplungen 20 die Arbeitsstationen 11, 12 und 13 wahlweise bewegbar sind.

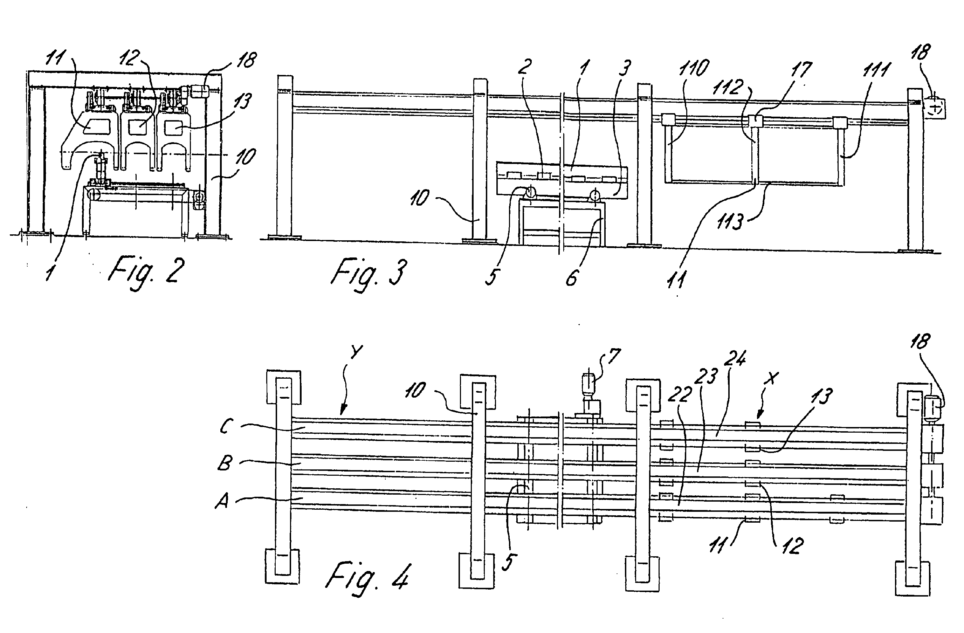

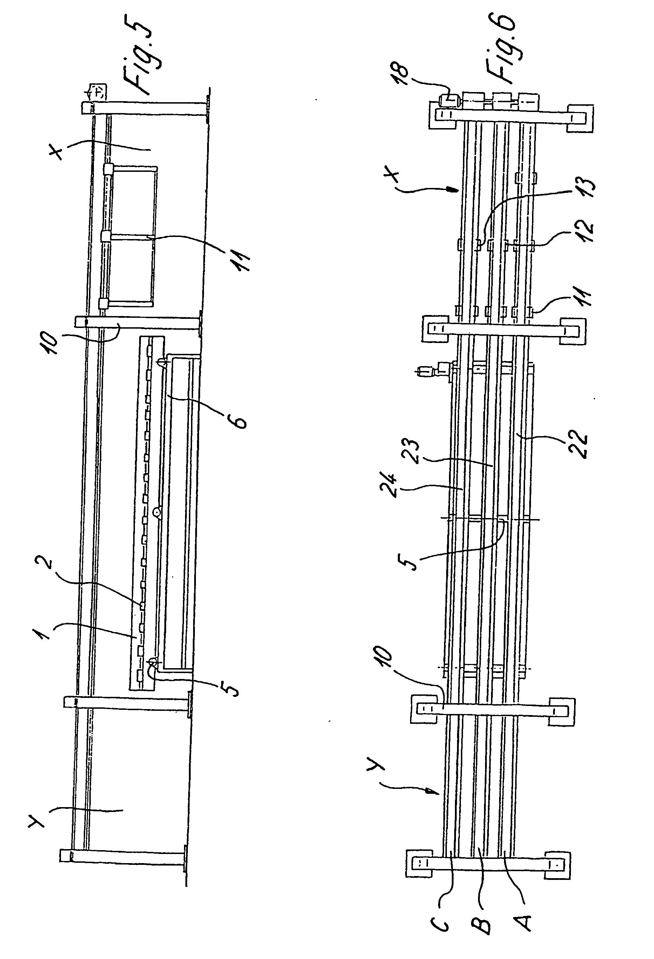

Wie insbesondere aus den Figuren 3 bis 6 zu erkennen ist, befindet sich der Auflagetisch 6 in einem mittleren Bereich, während die Arbeitsstation 11, 12 und 13 in einen seitlichen Endbereich X sowie einen gegenüberliegenden Endbereich Y positioniert werden können. Sobald die Arbeitsstationen 11, 12 oder 13 in den Endbereichen X oder Y positioniert sind, ist der Auflagetisch 6 frei zugänglich. Ferner ist das Rahmengestell offen gestaltet, so dass die Arbeitsstationen 11, 12 und 13 in den Endpositionen ebenfalls frei zugänglich sind und so Umrüstarbeiten vorgenommen werden können oder Material wie Primer, Kleber oder Folie nachfüllbar sind.

Die Arbeitsstationen 11, 12 und 13 bestehen aus mehreren Stimscheiben 110, 111 und 112, die über Längsstreben 113 miteinander verbunden sind. An den Stirnscheiben 110, 111 und 112 sind die zum Foliieren notwendigen Einrichtungen angebracht, wie Auftragseinrichtungen für das Primern, Gebläseeinrichtungen für das Belüften und Trocknen des Haftgrundes und eine Folienzuführeinrichtung mit Schneidgerät zum Aufbringen und Abtrennen der Folie.

Die Arbeitsstationen werden in Längsrichtung entlang der Führungen 22, 23 und 24 verfahren, wobei die Arbeitsstationen 11, 12 und 13 über einen gemeinsamen Antrieb 18 bewegbar sind. Die Arbeitsstationen können dabei sowohl in dem Bereich X als auch in dem Bereich Y abgestellt werden, um ein Profil 1 an dem Auflagetisch zu montieren oder zu demontieren.

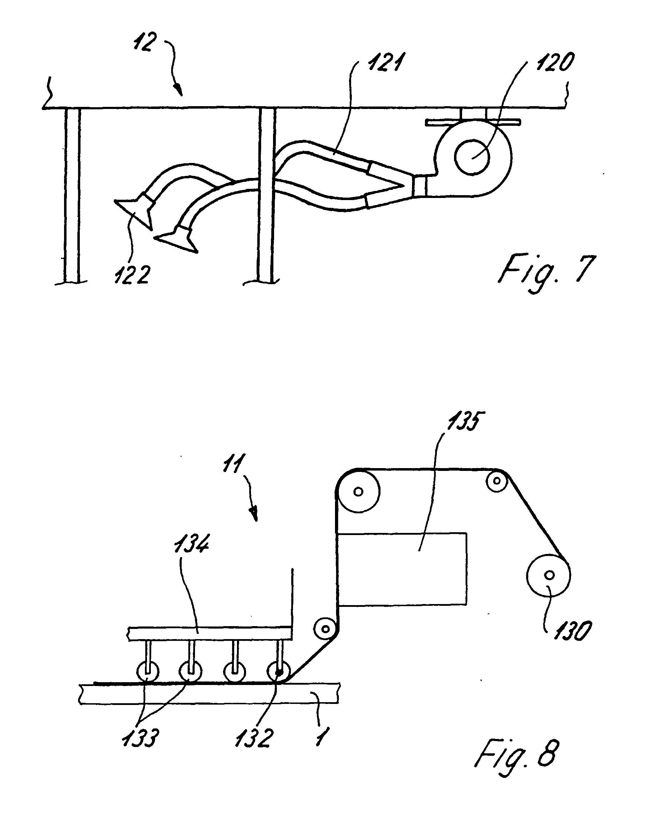

In Fig. 7 ist eine vergrößerte Ansicht der Arbeitsstation 12 zum Belüften und Trocknen des mit Primer bestrichenen Profils 1 dargestellt. Die Arbeitsstation 12 umfasst ein Gebläse 120, an das mehrere Leitungen 121 angeschlossen sind. Die Leitungen 121 sind mit jeweiligen Düsen 122 verbunden, so dass unterschiedliche Bereiche des Profils 1 belüftet werden können.

In Fig. 8 ist die Arbeitsstation 11 zum Aufkleben einer Folie auf das Profil 1 gezeigt. Von einer Vorratsrolle 130 wird die zu beschichtende Folie über mehrere Umlenkrollen 131 zu einer Andrückrolle 132 geführt, die die Folie auf eine Hauptfläche des Profils 1 andrückt. Um die Folie um die verschiedenen Kanten des Profils 1 umzulegen, sind weitere Andrückrollen 133 vorgesehen. Die Positionen der Andrückrollen 132 und 133 müssen auf das jeweilige Profil abgestimmt sein. Die Andrückrollen 133 sind dabei auf einem gemeinsamen Halter 134 montiert, der zusammen mit den Andrückrollen 132 und 133 entfernt werden kann. Anschließend kann ein neuer Halter mit Andrückrollen montiert werden, der für ein anderes Profil justiert ist. Die Folie wird ferner an einer Einrichtung 135 mit Klebstoff, vorzugsweise erhitztem aufgeschmolzenem Klebstoff benetzt.

### Nachfolgend wird das Verfahren zum Folieren von Profilen 1 näher beschrieben:

In der Ausgangsposition befinden sich alle drei Arbeitsstationen 11, 12 und 13 in der rechten Parkposition X und der Auflagetisch 6 in der Position A. Der Auflagetisch 6 ist somit frei zugänglich und wird mit einem Profil 1 bestückt. Dabei werden die Spannbacken als vorgefertigte Sätze für das jeweilige Profil 1 an entsprechenden Referenzpositionen in die Spannvorrichtung bzw. am Auflagetisch 6 festgelegt. Das Profil 1 wird nachfolgend durch die Spannvorrichtung 2 in der gewünschten Position festgelegt.

Die Arbeitsstation 11 wird mit profilspezifischen Rollensätzen zum Anrollen und Besäumen der Folie bestückt. Ferner wird die Folie in der erforderlichen Profilbreite eingesetzt und eine Klebeauftragsdüse für die entsprechende Folienbreite vorgesehen.

Die Arbeitsstation 13 wird für den Primer-Auftrag auf die Profilkontur bzw. Profilbreite eingestellt.

Anschließend fährt der Schlitten 4 am Auflagetisch 6 in die Position C und die Arbeitsstation 13 fährt von der Position X zu der Position Y und benetzt die Oberfläche des Profils 1 mit Primer. Im Bereich der Position Y befindet sich für die Arbeitsstation 13 eine Auffangwanne, die gegebenenfalls abtropfenden Restprimer auffängt.

Danach fährt der Schlitten 4 mit dem Profil 1 in die Position B. Dort fahren die Arbeitsstationen 12 und 11 von der Position X zu der Position Y, wobei die Arbeitsstation 12 den noch feuchten Primer mittels des Gebläses 120 trocknet. In der Position Y angekommen, fährt die Arbeitsstation 12 wieder zurück und nimmt dabei die Arbeitsstation 13 wieder zu der Ausgangsposition X mit. Hierbei findet ein weiteres Trocknen des Profils 1 statt.

Danach fährt der Schlitten 4 mit dem Profil 1 von der Position B in die Position C. Die Arbeitsstation wird zu den Profilen 1 bewegt und ein Ende der auf einer Rolle befindlichen Folie wird am Profilanfang am Auflagetisch geklemmt, und die Arbeitsstation 11 fährt von der Position Y zu der Position X. Dabei wird die mit Kleber beschichtete Folie auf das Profil 1 abgerollt und mittels der Andrückrollen 132 und 133 an das Profil 1 angedrückt. Gleichzeitig findet ein Besäumen der Folienbreite statt.

Nach Erreichen der Position X durch die Arbeitsstation 11 wird die Folie endseitig am Profil 1 abgetrennt. Das Profil 1 wird aus der Spannvorrichtung 2 entnommen.

An der Arbeitsstation 12 kann eine Auffangschale vorgesehen sein, die bis unter die Arbeitsstation 13 reicht und dazu dient, bei gemeinsamer Rückfahrt der Arbeitsstationen 13 und 12 aus der Position Y in die Position X möglicherweise abtropfenden Primer aufzufangen, um Verunreinigungen des Auflagetisches 6 und der Führungsbahnen im mittleren Bereich der Anlage zu vermeiden, die sonst zu Funktionsstörungen führen könnten.

## Patentansprüche

1. Verfahren zum Foliieren von Profilen (1), insbesondere für Fenster, Türen und Fassaden, mit den folgenden Schritten:
- Einspannen eines Profils (1) an einem Auflagetisch (6);
- Aufbringen eines Haftgrundes auf das Profil (1) mittel einer verfahrbaren ersten Arbeitsstation (13);
- Belüften und Trocknen des Haftgrundcs mittels einer verfahrbaren zweiten Arbeitsstation (12), und
- Aufkleben einer Folie mittels einer verfahrbaren dritten Arbeitsstation (11), wobei das Profi) (1) auf einem Schlitten (4) eingespannt wird, der quer zur Längsrichtung zu den einzelnen Arbeitsstationen (11, 12, 13) verfahren wird und die Arbeitsstationen (11, 12, 13) dann jeweils in Längsrichtung des Profils (1) bewegt werden.

2. Vorrichtung zum Foliieren von Profile (1), insbesondere für Fenster, Türen und Fassaden, mit:
- einer ersten Arbeitsstation (13) zum Aufbringen eines Haftuntergrundes auf ein Profil (1);
- einer zweiten Arbeitsstation (12) zum Belüften und Trocknen des Haftgrundes auf dem Profil (1), und
- einer dritten Arbeitsstation (11) zum Aufkleben einer Folie auf das Profil (1), **dadurch gekennzeichnet, dass** das Profil (1) an einem Auflagetisch (6) einspannbar ist und die drei Arbeitsstationcn (11, 12, 13) zum Aufbringen eines Haftgrundes zum Belüften und Trocknen des Haftgrundes und zum Aufkleben der Folie entlang der Längsrichtung des Profils (1) hewegbar sind und das Profil (1) am Auflagetisch (6) an einem Schlitten (4) festlegbar ist und der Schlitten (4) in einer Richtung quer zur Längsrichtung des Profils (1) verfahrbar ist.

3. Vorrichtung nach Anspruch 2, **dadurch gekennzeichnet, dass** die drei Arbeitsstationen (11, 12, 13) oberhalb des Auflagetisches (6) jeweils an Führungen (14, 15, 16) hängend angebracht sind.

4. Vorrichtung nach Anspruch 2 oder 3, **dadurch gekennzeichnet, dass** die Arbeitsstationen (11, 12, 13) einzeln oder zusammen in Längsrichtung des Profils (1) verfahrbar sind.

5. Vorrichtung nach einem der Ansprüche 2 bis 4, **dadurch gekennzeichnet, dass** die drei Arbeitsstationen (11, 12, 13) über eine gemeinsame Antriebseinheit (18) bewegbar sind und jeweils eine Kupplung (20) zum wahlweisen Einkuppeln mit der Antriebseinheit (18) aufweisen.

6. Vorrichtung nach einem der Ansprüche 2 bis 5, **dadurch gekennzeichnet, dass** die Arbeitsstationen (11, 12, 13) an ihrer jeweiligen Führung (14, 15, 16) bis außerhalb des Bereichs des Profils (1) verfahrhar sind.

7. Vorrichtung nach einem der Ansprüche 2 bis 6, **dadurch gekennzeichnet, dass** die Arbeitsstationen (11, 12, 13) an ihren jeweiligen Führungen (14, 15, 16) beidseitig des Profils (1) außerhalb des Bereichs des Profils (1) verfahrbar sind.

8. Vorrichtung nach einem der Ansprüche 2 bis 7, **dadurch gekennzeichnet, dass** die Führungen (14, 15, 16) der Arbeitsstationen (11, 12, 13) an einem Rahmengestell (10) angebracht sind, und die Arbeitsstationen (11, 12, 13) mindestens von einer Seite aus frei zugänglich sind.

9. Vorrichtung nach einem der Ansprüche 2 bis 8, **dadurch gekennzeichnet, dass** an ein oder mehreren Schlitten (4) mehrere Profile (1) gleichzeitig einspannbar sind.

10. Vorrichtung nach einem der Ansprüche 2 bis 9), **dadurch gekennzeichnet, dass** an dem Schlitten (4) vorbereitete auf das jeweilige Profils (1) angepasste Spannsätze montierbar sind.

## Claims

1. Method for foiling profiles (1), in particular for windows, doors and façades, having the following steps:
- clamping a profile (1) on a supporting table (6);
- applying a primer to the profile (1) by means of a moveable first workstation (13);
- ventilating and drying the primer by means of a moveable second workstation (12); and
- adhesively attaching a foil by means of a moveable third workstation (11),
wherein the profile (1) is clamped on a carriage (4) which is moved to the individual workstations (11, 12, 13) transversely to the longitudinal direction and the workstations (11, 12, 13) are then in each case moved in the longitudinal direction of the profile (1).

2. Device for foiling profiles (1), in particular for windows, doors and façades, having:
- a first workstation (13) for applying a primer to the profile (1) ;
- a second workstation (12) for ventilating and drying the primer on the profile (1); and
- a third workstation (11) for adhesively attaching a foil to the profile (1) ;
**characterized in that** the profile (1) can be clamped on a supporting table (6) and the three workstations (11, 12, 13) for applying a primer, for ventilating and drying the primer and for adhesively attaching the foil can be moved in the longitudinal direction of the profile (1) and the profile (1) can be fixed on a carriage (4) on the supporting table (6) and the carriage (4) can be moved in a direction transverse to the longitudinal direction of the profile (1).

3. Device according to Claim 2, **characterized in that** the three workstations (11, 12, 13) are mounted above the supporting table (6) in each case suspended on guides (14, 15, 16).

4. Device according to Claim 2 or 3, **characterized in that** the workstations (11, 12, 13) can be moved individually or together in the longitudinal direction of the profile (1).

5. Device according to one of Claims 2 to 4, **characterized in that** the three workstations (11, 12, 13) can be moved via a common drive unit (18) and have in each case a coupling (20) for optional engagement with the drive unit (18).

6. Device according to one of Claims 2 to 5, **characterized in that** the workstations (11, 12, 13) can be moved on their respective guides (14, 15, 16) until they are outside the region of the profile (1).

7. Device according to one of Claims 2 to 6, **characterized in that** the workstations (11, 12, 13) can be moved on their respective guides (14, 15, 16) on both sides of the profile (1) outside the region of the profile (1).

8. Device according to one of Claims 2 to 7, **characterized in that** the guides (14, 15, 16) of the workstations (11, 12, 13) are mounted on a framework (10) and the workstations (11, 12, 13) are freely accessible from at least one side.

9. Device according to one of Claims 2 to 8, **characterized in that** a plurality of profiles (1) can be clamped simultaneously on one or more carriages (4).

10. Device according to one of Claims 2 to 9, **characterized in that** prepared clamping sets adapted to the respective profile (1) can be fitted on the carriage (4).

## Revendications

1. Procédé pour couvrir d'une feuille des profilés (1), en particulier pour fenêtres, portes et façades, comprenant les étapes suivantes consistant à :
- serrer un profilé (1) sur une table porte-pièce (6) ;
- appliquer un fond adhésif sur le profilé (1) à l'aide d'une première station de travail mobile (13) ;
- aérer et sécher le fond adhésif à l'aide d'une deuxième station de travail mobile (12), et
- coller une feuille à l'aide d'une troisième station de travail mobile (11),
dans lequel le profilé (1) est serré sur un chariot (4), qui est déplacé transversalement au sens longitudinal des différentes stations de travail (11, 12, 13) et les stations de travail (11, 12, 13) sont ensuite mues respectivement dans le sens longitudinal du profilé (1).

2. Dispositif pour couvrir d'une feuille des profilés (1), en particulier pour fenêtres, portes et façades, comprenant :
- une première station de travail (13) servant à appliquer un fond adhésif sur un profilé (1) ;
- une deuxième station de travail (12) servant à aérer et à sécher le fond adhésif sur le profilé (1), et
- une troisième station de travail (11) servant à coller une feuille sur le profilé (1),
**caractérisé en ce que** le profilé (1) peut être serré au niveau d'une table porte-pièce (6) et les trois stations de travail (11, 12, 13) servant à appliquer un fond adhésif, à aérer et à sécher le fond adhésif et à coller la feuille sont mobiles le long du sens longitudinal du profilé (1) et le profilé (1) peut être fixé sur la table porte-pièce (6) sur un chariot (4) et le chariot (4) peut être déplacé dans un sens transversal au sens longitudinal du profilé (1).

3. Dispositif selon la revendication 2, **caractérisé en ce que** les trois stations de travail (11, 12, 13) sont montées suspendues au-dessus de la table porte-pièce (6) respectivement au niveau de guidages (14, 15, 16).

4. Dispositif selon la revendication 2 ou 3, **caractérisé en ce que** les stations de travail (11, 12, 13) peuvent être déplacées individuellement ou ensemble dans le sens longitudinal du profilé (1).

5. Dispositif selon l'une quelconque des revendications 2 à 4, **caractérisé en ce que** les trois stations de travail (11, 12, 13) sont mobiles par le biais d'une unité d'entraînement commune (18) et présentent respectivement un accouplement (20) pour l'accouplement au choix avec l'unité d'entraînement (18).

6. Dispositif selon l'une quelconque des revendications 2 à 5, **caractérisé en ce que** les stations de travail (11, 12, 13) peuvent être déplacées au niveau de leur guidage respectif (14, 15, 16) jusqu'à l'extérieur de la zone du profilé (1).

7. Dispositif selon l'une quelconque des revendications 2 à 6, **caractérisé en ce que** les stations de travail (11, 12, 13) peuvent être déplacées au niveau de leurs guidages respectifs (14, 15, 16) des deux côtés du profilé (1) à l'extérieur de la zone du profilé (1).

8. Dispositif selon l'une quelconque des revendications 2 à 7, **caractérisé en ce que** les guidages (14, 15, 16) des stations de travail (11, 12, 13) sont montés sur un châssis (10) et les stations de travail (11, 12, 13) sont librement accessibles au moins d'un côté.

9. Dispositif selon l'une quelconque des revendications 2 à 8, **caractérisé en ce que** plusieurs profilés (1) peuvent être serrés en même temps sur un ou plusieurs chariots (4).

10. Dispositif selon l'une quelconque des revendications 2 à 9, **caractérisé en ce que** des jeux de pièces de serrage préparés, adaptés au profilé respectif (1) peuvent être montés sur le chariot (4).
